# EUROPEAN PATENT SPECIFICATION

(11) **EP 4 467 868 B1**
(45) Date of publication and mention of the grant of the patent: **25.02.2026**
(21) Application number: 23175629.7
(22) Date of filing: 26.05.2023
(51) Int. Cl.: F21S 43/237, F21S 43/245, F21S 43/247, F21V 8/00, B29C 45/00, B29C 33/00, F21W 103/15

(54) **LIGHTGUIDE FOR A VEHICLE LAMP, VEHICLE LAMP, MOULD FOR MOULDING THE LIGHTGUIDE AND METHOD OF MANUFACTURING THE MOULD**
LICHTLEITER FÜR EINE FAHRZEUGLAMPE, FAHRZEUGLAMPE, FORM ZUM FORMEN DES LICHTLEITERS UND VERFAHREN ZUR HERSTELLUNG DER FORM
GUIDE DE LUMIÈRE POUR LAMPE DE VÉHICULE, LAMPE DE VÉHICULE, MOULE POUR MOULER LE GUIDE DE LUMIÈRE ET PROCÉDÉ DE FABRICATION DU MOULE

(43) Date of publication of application: 27.11.2024
(73) Proprietor: Hella Autotechnik Nova, s.r.o., 78985 Mohelnice (CZ)
(72) Inventor: Kuchynka, Tomá, 779 00 Olomouc (CZ)
(74) Representative: Behr-Wenning, Gregor

(56) References cited:
- EP-A1- 2 955 554
- EP-A1- 3 760 916
- EP-A2- 0 940 625
- WO-A1-2018/222637
- DE-A1- 102005 011 715
- DE-A1- 102015 106 242
- DE-U1- 202004 010 853
- KR-A- 20110 027 185
- KR-B1- 100 786 384

## Description

### Technical field

The present invention relates to a lightguide for improving homogeneity of a vehicle lamp, particularly a side marker lamp. The invention also relates to the vehicle lamp, a mould for moulding the lightguide and a method of manufacturing the mould.

### Background of the Invention

In the state of the art, when a side marker lamp is viewed from a side viewing angle, black area (called "a dark spot") can be seen near one end of an output surface of the lamp. This inhomogeneity is caused by an arrangement of lamp's lightguide with a standard prism optics, which is used to direct light towards the output surface. Specifically, the lightguide comprises an elongated, approximately cylindrical first part and a second part, wherein the second part comprises a prism optics having a plurality of linear reflection elements and the output surface arranged opposite to the prism optics. Light from a light source is coupled into the first part of the lightguide and then reflected on the prism optics towards the output surface of the lightguide, where the light leaves the lightguide. However, the standard prism optics does not direct the light homogeneously towards the whole area of the output surface. Specifically, it does not direct the light to a proximal section of the output surface, that is to a section proximal to the first part of the lightguide.

This problem can be solved by changing the geometry of the prism optics, primarily by increasing the number of linear reflection elements. However, this adjustment requires a significant modification of a mould for moulding the lightguide. Often the existing moulds cannot be used at all and completely new moulds have to be made, which rapidly increases production costs.

Document EP2955554A1 describes a lightguide with an input portion, which splits into two branches. A triangular cavity with a partially round bottom is formed in the meeting point of the two branches. The cavity splits the light into the branches such that the branches can emit light more homogenously than without the cavity. This solution is however not applicable for straight lightguides, and there is a room for further improvement of lightguide homogeneity.

Therefore, it would be desirable to come up with a solution that would provide a lightguide for a vehicle lamp with improved homogeneity, that is without the dark spot at the proximal area of the output surface. The new solution should also be inexpensive to produce and it should not require significant modification of the existing moulds.

### Summary of the Invention

The shortcomings of the solutions known in the prior art are to some extent eliminated by a lightguide for a vehicle lamp, the lightguide comprising an elongated first part and a second part, wherein the first part comprises a coupling face for coupling light from a light source into the lightguide and wherein the second part comprises a reflection surface and an output surface for outputting light from the lightguide. The reflection surface and the output surface are arranged opposite to each other. The reflection surface comprises a plurality of reflection elements for reflecting light towards the output surface, wherein the plurality of reflection elements comprises at least a first reflection element and a second reflection element, wherein the first reflection element is the closest to the first part from the plurality of reflection elements and the second reflection element is the closest to the first reflection element from the plurality of reflection elements. In other words, the first reflection element is arranged adjacent to the first part and the second reflection element is arranged adjacent to the first reflection element. Reflection elements can be e.g., implemented as standard prism optics known from the state of the art, for example as set of step-shaped linear elements. These elements reflect light on the principle of total internal reflection towards the output surface.

The output surface comprises a proximal output section which is proximal to the first part and a distal output section which is distal to the first part. The proximal output section is thus located adjacent to a first end of the output surface and the distal output section is located adjacent to the proximal output section and it extends from the proximal output section to a second end of the output surface, wherein the first end of the output surface is closer to the first part of the lightguide than the second end of the output surface. Preferably, the area of the proximal output section is approximately one fifth of the area of the entire output surface. The area of the distal output section is complementary, which means that the proximal output section and the distal output section together form the entire output surface. Alternatively, depending on the arrangement of the lightguide, the area of the proximal output section can be smaller than one fifth of the entire output surface, for example approximately one sixth, one seventh or smaller. On the other hand, the area of the proximal output section can be larger than one fifth of the entire output surface, for example approximately one fourth, one third or larger. However, the area of the proximal output section is generally smaller than or equal to the area of the distal output section.

The lightguide according to present invention comprises at least one rounded recess for reflecting light towards the proximal output section to increase homogeneity of light emitted from the output surface, wherein the at least one rounded recess is arranged at least partially on the first reflection element. The at least one rounded recess thus reflects light to the proximal output section and no dark spot is created in the proximal output section, or the dark spot is at least reduced. Light output through the output surface is more homogeneous than with the standard prism optics according to the prior art without the at least one rounded recess. In addition, no significant modification of the existing mould is needed. Specifically, just at least one rounded protrusion is formed on the existing mould to form the at least one rounded recess. This enables inexpensive production of lightguides with improved homogeneity, that is without a dark spot.

The at least one rounded recess comprises a first rounded recess and a second rounded recess, wherein the second rounded recess extends into the first rounded recess. The second rounded recess is used when the first rounded recess does not eliminate whole dark spot in the proximal output section, specifically when a dark spot remains near the first end of the output surface. As a result of the second rounded recess extending into the first rounded recess, the proximal output section is illuminated more homogeneously and no dark spot remains in the proximal output section.

Preferably, the at least one rounded recess has a spherical shape. Thanks to this shape, the at least one rounded recess reflects light more isotropically and a dark spot in the proximal output section is illuminated more homogeneously. This improves the resulting visual appearance.

Preferably, the first rounded recess is arranged at least partially on the first reflection element and the second rounded recess is arranged at least partially on the second reflection element. The first rounded recess and the second rounded recess in these positions reflect light near the first end of the output surface, where the dark spot typically occurs. The second rounded recess reflects the light from the light source closer to the first end of the output surface than the first rounded recess does.

Preferably, the second rounded recess is smaller than the first rounded recess, because the second rounded recess should not reduce the light flux too much. The light outputting through the output surface is thus more homogenous and it still has sufficient intensity.

The shortcomings of the solutions known in the prior art are to some extent also eliminated by a vehicle lamp comprising a light source and the lightguide according to the present invention, wherein the light source is directed to the coupling face of the first part of the lightguide. Light from the light source is coupled into the lightguide, then passes through the first part of the lightguide to the second part of the lightguide and is reflected on the reflection surface and passes through the output surface. Light source can be, for example, LED.

The vehicle lamp can be a side marker lamp, which can be used on the side of the vehicle to mark the contour of the vehicle. This lamp is often seen from a side viewing angle and it is therefore very advantageous to eliminate a dark spot using the at least one rounded recess on the reflection surface of the lightguide.

The shortcomings of the solutions known in the prior art are to some extent also eliminated by a mould for moulding the lightguide according to the present invention, the mould comprising an elongated first mould part for moulding the elongated first part of the lightguide and a second mould part for moulding the second part of the lightguide, wherein the first mould part comprises a coupling face mould part for moulding the coupling face of the lightguide for coupling light from a light source into the lightguide. The second mould part comprises a reflection surface mould part for moulding the reflection surface of the lightguide and an output surface mould part for moulding the output surface of the lightguide for outputting light from the lightguide. The reflection surface mould part comprises a plurality of reflection element mould parts for moulding a plurality of reflection elements of the lightguide for reflecting light towards the output surface. The plurality of reflection element mould parts comprises at least a first reflection element mould part for moulding the first reflection element of the lightguide and a second reflection element mould part for moulding the second reflection element of the lightguide, wherein the first reflection element mould part is the closest to the first mould part from the plurality of reflection element mould parts and the second reflection element mould part is the closest to the first reflection element mould part from the plurality of reflection element mould parts.

The output surface mould part comprises a proximal output section mould part for moulding the proximal output section of the lightguide which is proximal to the first mould part and a distal output section mould part for moulding the distal output section of the lightguide which is distal to the second mould part. The mould according to present invention comprises at least one rounded protrusion for moulding the at least one rounded recess of the lightguide for reflecting light towards the proximal output section of the lightguide to increase homogeneity of light emitted from the output surface of the lightguide. The at least one rounded protrusion is arranged at least partially on the first reflection element mould part. The at least one rounded protrusion comprises a first rounded protrusion and a second rounded protrusion formed on the reflection surface mould part, wherein the second rounded protrusion extends into the first rounded protrusion.

The mould has a negative shape with respect to the shape of the lightguide and that means that respective mould parts have negative shape with respect to the shape of the respective parts of the lightguide. For example, the first mould part has a negative shape with respect to the shape of the first part of the lightguide and, for example, the at least one rounded protrusion has a negative shape with respect to the shape of the at least one rounded recess. The at least one rounded protrusion for moulding the at least one rounded recess can be formed on the first reflection element by welding. This is not a significant modification of the existing mould and production costs are not rapidly increased.

The shortcomings of the solutions known in the prior art are to some extent also eliminated by a method of manufacturing the mould according to the present invention comprising the steps of providing a mould and forming at least one rounded protrusion on the mould.

The mould, which is provided in the first step of the method, is known from the state of the art, and comprises an elongated first mould part for moulding the elongated first part of the lightguide and a second mould part for moulding the second part of the lightguide, wherein the first mould part comprises a coupling face mould part for moulding the coupling face of the lightguide for coupling light from a light source into the lightguide and wherein the second mould part comprises a reflection surface mould part for moulding the reflection surface of the lightguide and an output surface mould part for moulding the output surface of the lightguide for outputting light from the lightguide. The reflection surface mould part comprises a plurality of reflection element mould parts for moulding a plurality of reflection elements of the lightguide for reflecting light towards the output surface of the lightguide, wherein the plurality of reflection element mould parts comprises at least a first reflection element mould part for moulding the first reflection element of the lightguide and a second reflection element mould part for moulding the second reflection element of the lightguide. The first reflection element mould part is the closest to the first mould part from the plurality of reflection element mould parts and the second reflection element mould part is the closest to the first reflection element mould part from the plurality of reflection element mould parts. The output surface mould part comprises a proximal output section mould part for moulding the proximal output section of the lightguide which is proximal to the first mould part and a distal output section mould part for moulding the distal output section of the lightguide which is distal to the second mould part.

Second step is the step of forming at least one rounded protrusion on the mould for moulding the at least one rounded recess of the lightguide for reflecting light towards the proximal output section of the lightguide to increase homogeneity of light emitted from the output surface of the lightguide, wherein the at least one rounded protrusion is formed at least partially on the first reflection element mould part. The at least one rounded protrusion comprises a first rounded protrusion and a second rounded protrusion formed on the reflection surface mould part, wherein the second rounded protrusion extends into the first rounded protrusion. The existing mould can thus be used and is only slightly modified by forming the at least one rounded protrusion. Specifically, the at least one rounded protrusion can be formed on the first reflection element by welding.

### Description of drawings

A summary of the invention is further described by means of exemplary embodiments thereof, which are described with reference to the accompanying drawings, in which:
Fig. 1 shows a lightguide according to the invention in an exemplary embodiment with a light source,
Fig. 2 shows another view of the lightguide according to the invention in the exemplary embodiment with an output surface visible,
Fig. 3 shows yet another view of the lightguide according to the invention in the exemplary embodiment with a reflection surface visible,
Fig. 4 shows a detail view of the reflection surface with a plurality of reflection elements and with two rounded recesses and
Fig. 5 shows a detail view of the two rounded recesses arranged on a first reflection element and a second reflection element.

### Exemplary Embodiments of the Invention

The invention will be further described by means of exemplary embodiments with reference to the respective drawings.

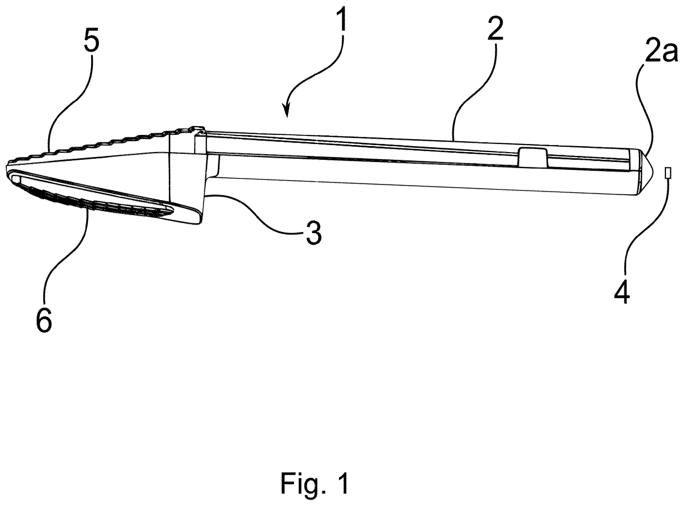

An example of the invention is a lightguide 1 as depicted in Fig. 1 to Fig. 5, specifically it is a lightguide 1 for a side marker lamp. The lightguide 1 according to the present invention comprises an elongated, approximately cylindrical first part 2 and a second part 3, wherein the second part 3 forms a continuation of the first part 2 on one end of the first part 2. The first part 2 has two ends, wherein the first end comprises a coupling face 2a for coupling light from a light source 4 into the first part 2 of the lightguide 1 and the second end connects the first part 2 to the second part 3. As can be seen in Fig. 1 to Fig. 3, the light source 4, for example LED, is arranged outside the lightguide 1 near the coupling face 2a and is directed to the coupling face 2a. Preferably, the coupling face 2a has a conical shape. The light from the light source 4 is thus coupled into the lightguide 1 through the coupling face 2a and then passes through the first part 2 to the second part 3. The lightguide 1 is made of plastic.

The second part 3 comprises a reflection surface 5 and an output surface 6 which are arranged substantially opposite to each other and which are arranged on opposite lateral sides of the lightguide 1. In this exemplary embodiment, as can be seen for example in Fig. 1, the second part 3 is approximately wedge-shaped. That means that although the reflection surface 5 and the output surface 6 are arranged opposite to each other, they are not parallel. Specifically, the width of the second part 3 is decreasing from the one end, which is adjacent to the first part 2, to another end.

The reflection surface 5 comprises a plurality of reflection elements 5a, 5b for reflecting light towards the output surface 6. Reflection occurs due to the principle of total internal reflection, which means that the incident angle of a light beam is larger than critical angle and all the light is reflected. In the exemplary embodiment according to Fig. 1 to Fig. 5, the reflection elements 5a, 5b are implemented as step-shaped linear, approximately rectangular, elements. Specifically, the reflection surface 5 comprises fifteen reflection elements 5a, 5b, however the number of reflection elements 5a, 5b can be different, for example less than fifteen reflection elements 5a, 5b can be provided. Alternatively, the shape or dimension of the reflection elements 5a, 5b can be different as well, if such an arrangement allows light to be reflected towards the output surface.

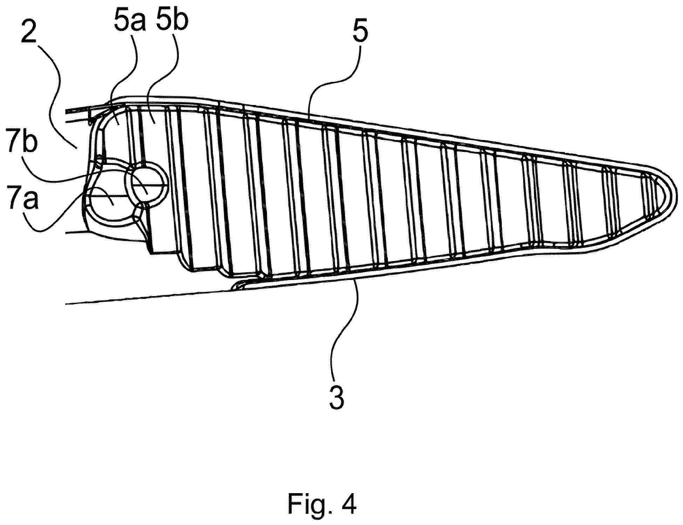

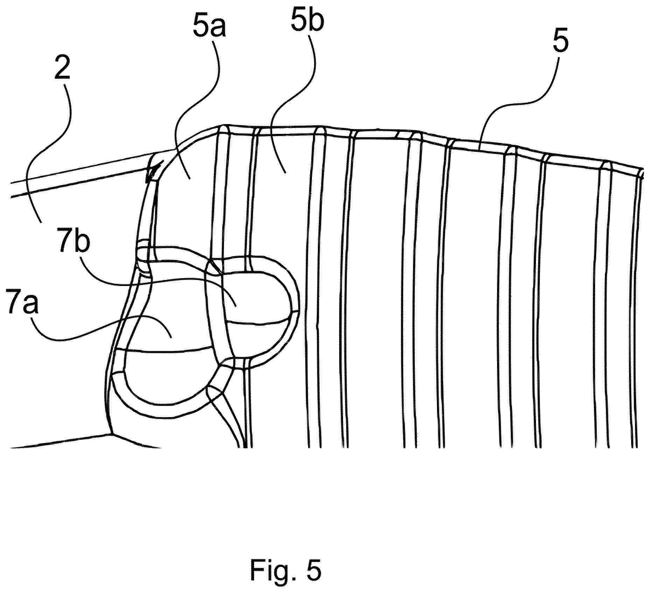

The plurality of reflection elements 5a, 5b comprises at least a first reflection element 5a and a second reflection element 5b, which can be seen in detail in Fig. 4 or Fig. 5. The first reflection element 5a is the closest to the first part 2 from the plurality of reflection elements 5a, 5b and the second reflection element 5b is the closest to the first reflection element 5a from the plurality of reflection elements 5a, 5b. In other words, the first reflection element 5a is arranged adjacent to the first part 2 and the second reflection element 5b is arranged adjacent to the first reflection element 5b.

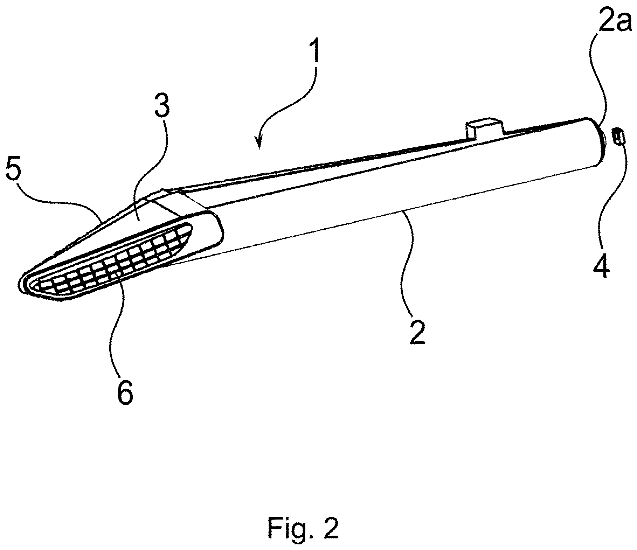

The output surface 6 comprises a plurality of output elements for outputting light from the lightguide 1, wherein in the exemplary embodiment of the invention, these elements are step-shaped. In this exemplary embodiment, as can be seen for example in Fig. 1 or Fig. 2, the output surface 6 comprises thirteen output elements, however the number, shape or dimensions of the output elements can be varied. For the purpose of this invention, a proximal output section of the output surface 6 and a distal output section of the output surface 6 are defined. The proximal output section is proximal to the first part 2 and a distal output section is distal to the first part 2. The proximal output section is thus located adjacent to a first end of the output surface 6 and the distal output section is located adjacent to the proximal output section and it extends from the proximal output section to a second end of the output surface 6, wherein the first end of the output surface 6 is closer to the first part 2 of the lightguide 1 than the second end of the output surface 6.

In the exemplary embodiment of the present invention, the area of the proximal output section is approximately one fifth of the area of the entire output surface 6. The area of the distal output section is complementary, which means that the proximal output section and the distal output section together form the entire output surface 6. In alternative embodiments of the lightguide 1, the area of the proximal output section can be smaller than one fifth of the entire output surface 6, for example approximately one sixth, one seventh or smaller. On the other hand, the area of the proximal output section can be larger than one fifth of the entire output surface 6, for example approximately one fourth, one third or larger. However, the area of the proximal output section is generally smaller than or equal to the area of the distal output section.

The above-described arrangement of the lightguide 1 is known from the prior art as well, with the essential difference that the lightguide 1 of the present invention comprises at least one rounded recess 7a, 7b on the reflection surface 5 as will be described below.

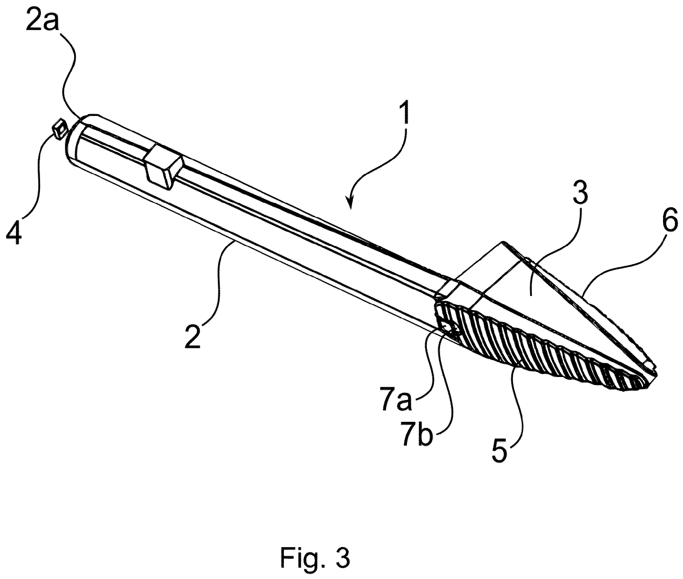

As can be seen in Fig. 3, Fig. 4 or Fig. 5, the lightguide 1 according to the present invention comprises a first rounded recess 7a and a second rounded recess 7b, wherein the first rounded recess 7a is arranged at least partially on the first reflection element 5a and the second rounded recess 7b is arranged at least partially on the second reflection element 5b. The second rounded recess 7b extends into the first rounded recess 7a and is smaller than the first rounded recess 7b, which means that the surface area of the second rounded recess 7b is smaller than the surface area of the first rounded recess 7a. Specific sizes of the first rounded recess 7a and the second rounded recess 7b are chosen so that the light flux though the second part 3 is not reduced too much and the light outputting through the output surface 6 still has sufficient intensity. Preferably, the first rounded recess 7a and the second rounded recess 7b have a spherical shape. The diameter of the first rounded recess 7a is thus larger than the diameter of the second rounded recess 7b.

The first rounded recess 7a and the second rounded recess 7b reflect the light towards the proximal output section to eliminate a dark spot on an output surface 6. Specifically, the first rounded recess 7a reflects the light closer to the distal output section than the second rounded recess 7b does. On the other hand, the second rounded recess 7b reflects the light closer to the first end of the output surface 6 than the first rounded recess 7a does.

Alternatively, what is however not according to the claimed invention, the lightguide 1 may comprise only the first rounded recess 7a, if the dark spot in the proximal output section is reliably and sufficiently eliminated.

Alternatively, more than two rounded recesses 7a, 7b may be formed on the reflection surface 5, if the dark spot is not sufficiently eliminated by the first rounded recess 7a and the second rounded recess 7b. A third rounded recess has to be smaller than the second rounded recess 7b. However, considering the lightguide 1 in the exemplary embodiment described above, practical tests show that more than two rounded recesses 7a, 7b are not necessary.

Alternatively, the at least one rounded recess 7a, 7b do not necessarily need to be spherical, however it should be rounded so that the proximal output section is illuminated homogeneously.

The lightguide 1 can be moulded from plastic using the existing mould which is only slightly modified. Specifically, the at least one rounded protrusion for moulding at least one rounded recess 7a, 7b is formed on the existing mould for example by welding. The modified mould according to the invention thus comprises respective mould parts for moulding the respective parts of the lightguide 1.

Specifically, the mould for moulding the lightguide 1 comprises an elongated first mould part for moulding the elongated first part 2 and a second mould part for moulding the second part 3, wherein the first mould part comprises a coupling face mould part for moulding the coupling face 2a for coupling light from a light source 4 into the lightguide 1. The second mould part comprises a reflection surface mould part for moulding the reflection surface 5 and an output surface mould part for moulding the output surface 6 for outputting light from the lightguide. The reflection surface mould part comprises a plurality of reflection element mould parts for moulding a plurality of reflection elements 5a, 5b for reflecting light towards the output surface 6. The plurality of reflection element mould parts comprises at least a first reflection element mould part for moulding the first reflection element 5a and a second reflection element mould part for moulding the second reflection element 5b, wherein the first reflection element mould part is the closest to the first mould part from the plurality of reflection element mould parts and the second reflection element mould part is the closest to the first reflection element mould part from the plurality of reflection element mould parts.

The output surface mould part comprises a proximal output section mould part for moulding the proximal output section which is proximal to the first mould part and a distal output section mould part for moulding the distal output section which is distal to the second mould part. The mould comprises at least one rounded protrusion for moulding the at least one rounded recess 7a, 7b for reflecting light towards the proximal output section, wherein the at least one rounded protrusion is arranged on the first reflection element mould part. According to the invention, a first rounded protrusion and a second rounded protrusion are formed on the reflection surface mould part. Specifically, the first rounded protrusion is formed at least partially on the first reflection element mould part and the second rounded protrusion is formed at least partially on the second reflection element mould part. The second rounded protrusion extends into the first rounded protrusion (that means that it is formed in contact with the first rounded protrusion) and is smaller than the first rounded protrusion. Specific sizes of the first rounded protrusion and the second rounded protrusion are chosen so that the light flux through the second part 3 of the moulded lightguide 1 is not reduced too much and the light outputting through the output surface 6 still has sufficient intensity.

Alternatively, what is however not according to the claimed invention, the mould may comprise only the first rounded protrusion, if the dark spot in the proximal output section is reliably and sufficiently eliminated.

Alternatively, more than two rounded protrusions may be formed on the reflection surface mould part, if the dark spot is not sufficiently eliminated by the first rounded protrusion and the second rounded protrusion. A third rounded protrusion has to be smaller than the second rounded protrusion. However, considering the lightguide 1 and the mould in the exemplary embodiment described above, practical tests show that more than two rounded protrusions are not necessary.

Alternatively, the at least one rounded protrusion do not necessarily need to be spherical, however it should be rounded so that the proximal output section of the moulded lightguide 1 is illuminated homogeneously.

### List of reference numbers

- 1 -: lightguide
- 2 -: first part
- 2a -: coupling face
- 3 -: second part
- 4 -: light source
- 5 -: reflection surface
- 5a -: first reflection element
- 5b -: second reflection element
- 6 -: output surface
- 7a -: first rounded recess
- 7b -: second rounded recess

## Claims

1. Lightguide (1) for a vehicle lamp, the lightguide (1) comprising an elongated first part (2) and a second part (3), wherein the first part (2) comprises a coupling face (2a) for coupling light from a light source (4) into the lightguide (1) and wherein the second part (3) comprises a reflection surface (5) and an output surface (6) for outputting light from the lightguide (1), wherein the reflection surface (5) comprises a plurality of reflection elements (5a, 5b) for reflecting light towards the output surface (6), wherein the plurality of reflection elements (5a, 5b) comprises at least a first reflection element (5a) and a second reflection element (5b), wherein the first reflection element (5a) is the closest to the first part (2) from the plurality of reflection elements (5a, 5b) and the second reflection element (5b) is the closest to the first reflection element (5a) from the plurality of reflection elements (5a, 5b), wherein the output surface (6) comprises a proximal output section which is proximal to the first part (2) and a distal output section which is distal to the first part (2), wherein the lightguide (1) comprises at least one rounded recess (7a, 7b) for reflecting light towards the proximal output section to increase homogeneity of light emitted from the output surface (6), wherein the at least one rounded recess (7a, 7b) is arranged at least partially on the first reflection element (5a), **characterised in that** the at least one rounded recess (7a, 7b) comprises a first rounded recess (7a) and a second rounded recess (7b), wherein the second rounded recess (7b) extends into the first rounded recess (7a).

2. The lightguide (1) according to claim 1, **characterised in that** the at least one rounded recess (7a, 7b) has a spherical shape.

3. The lightguide (1) according to any one of the preceding claims, **characterised in that** the first rounded recess (7a) is arranged at least partially on the first reflection element (5a) and the second rounded recess (7b) is arranged at least partially on the second reflection element (5b).

4. The lightguide (1) according to any one of the preceding claims , **characterised in that** the second rounded recess (7b) is smaller than the first rounded recess (7a).

5. Vehicle lamp **characterized in that** it comprises a light source (4) and the lightguide (1) according to any of the preceding claims, wherein the light source (4) is directed to the coupling face (2a) of the first part (2) of the lightguide (1).

6. The vehicle lamp according to claim 5 **characterized in that** it is a side marker lamp.

7. Mould for moulding the lightguide (1) according to any of claims 1 to 4, the mould comprising an elongated first mould part for moulding the elongated first part (2) of the lightguide (1) and a second mould part for moulding the second part (3) of the lightguide (1), wherein the first mould part comprises a coupling face mould part for moulding the coupling face (2a) of the lightguide (1) for coupling light from a light source (4) into the lightguide (1) and wherein the second mould part comprises a reflection surface mould part for moulding the reflection surface (5) of the lightguide (1) and an output surface mould part for moulding the output surface (6) of the lightguide (1) for outputting light from the lightguide (1), wherein the reflection surface mould part comprises a plurality of reflection element mould parts for moulding a plurality of reflection elements (5a, 5b) of the lightguide (1) for reflecting light towards the output surface (6) of the lightguide (1), wherein the plurality of reflection element mould parts comprises at least a first reflection element mould part for moulding the first reflection element (5a) of the lightguide (1) and a second reflection element mould part for moulding the second reflection element (5b) of the lightguide (1), wherein the first reflection element mould part is the closest to the first mould part from the plurality of reflection element mould parts and the second reflection element mould part is the closest to the first reflection element mould part from the plurality of reflection element mould parts, wherein the output surface mould part comprises a proximal output section mould part for moulding the proximal output section of the lightguide (1) which is proximal to the first mould part and a distal output section mould part for moulding the distal output section of the lightguide (1) which is distal to the second mould part, wherein the mould comprises at least one rounded protrusion for moulding the at least one rounded recess (7a, 7b) of the lightguide (1) for reflecting light towards the proximal output section of the lightguide (1) to increase homogeneity of light emitted from the output surface (6) of the lightguide (1), wherein the at least one rounded protrusion is arranged at least partially on the first reflection element mould part, **characterized in that** the at least one rounded protrusion comprises a first rounded protrusion and a second rounded protrusion formed on the reflection surface mould part, wherein the second rounded protrusion extends into the first rounded protrusion.

8. Method of manufacturing the mould according to claim 7 **characterized in that** it comprises the steps of:
• providing a mould, the mould comprising an elongated first mould part for moulding the elongated first part (2) of the lightguide (1) and a second mould part for moulding the second part (3) of the lightguide (1), wherein the first mould part comprises a coupling face mould part for moulding the coupling face (2a) of the lightguide (1) for coupling light from a light source (4) into the lightguide (1) and wherein the second mould part comprises a reflection surface mould part for moulding the reflection surface (5) of the lightguide (1) and an output surface mould part for moulding the output surface (6) of the lightguide (1) for outputting light from the lightguide (1), wherein the reflection surface mould part comprises a plurality of reflection element mould parts for moulding a plurality of reflection elements (5a, 5b) of the lightguide (1) for reflecting light towards the output surface (6) of the lightguide (1), wherein the plurality of reflection element mould parts comprises at least a first reflection element mould part for moulding the first reflection element (5a) of the lightguide (1) and a second reflection element mould part for moulding the second reflection element (5b) of the lightguide (1), wherein the first reflection element mould part is the closest to the first mould part from the plurality of reflection element mould parts and the second reflection element mould part is the closest to the first reflection element mould part from the plurality of reflection element mould parts, wherein the output surface mould part comprises a proximal output section mould part for moulding the proximal output section of the lightguide (1) which is proximal to the first mould part and a distal output section mould part for moulding the distal output section of the lightguide (1) which is distal to the second mould part;
• forming at least one rounded protrusion on the mould for moulding the at least one rounded recess (7a, 7b) of the lightguide (1) for reflecting light towards the proximal output section of the lightguide (1) to increase homogeneity of light emitted from the output surface (6) of the lightguide (1), wherein the at least one rounded protrusion is formed at least partially on the first reflection element mould part, wherein
• the at least one rounded protrusion comprises a first rounded protrusion and a second rounded protrusion formed on the reflection surface mould part, wherein the second rounded protrusion extends into the first rounded protrusion.

## Patentansprüche

1. Lichtleiter (1) für eine Fahrzeuglampe, wobei der Lichtleiter (1) einen länglichen ersten Teil (2) und einen zweiten Teil (3) umfasst, wobei der erste Teil (2) eine Kopplungsfläche (2a) zum Koppeln von Licht von einer Lichtquelle (4) in den Lichtleiter (1) umfasst und wobei der zweite Teil (3) eine Reflexionsfläche (5) und eine Ausgabefläche (6) zum Ausgeben von Licht vom Lichtleiter (1) umfasst, wobei die Reflexionsfläche (5) eine Vielzahl von Reflexionselementen (5a, 5b) zum Reflektieren von Licht in Richtung der Ausgabefläche (6) umfasst, wobei die Vielzahl von Reflexionselementen (5a, 5b) mindestens ein erstes Reflexionselement (5a) und ein zweites Reflexionselement (5b) umfasst, wobei das erste Reflexionselement (5a) dem ersten Teil (2) von der Vielzahl von Reflexionselementen (5a, 5b) am nächsten ist und das zweite Reflexionselement (5b) dem ersten Reflexionselement (5a) von der Vielzahl von Reflexionselementen (5a, 5b) am nächsten ist, wobei die Ausgabefläche (6) einen proximalen Ausgabeabschnitt, der dem ersten Teil (2) proximal ist, und einen distalen Ausgabeabschnitt, der dem ersten Teil (2) distal ist, umfasst, wobei der Lichtleiter (1) mindestens eine abgerundete Ausnehmung (7a, 7b) zum Reflektieren von Licht in Richtung des proximalen Ausgabeabschnitts umfasst, um die Homogenität des von der Ausgabefläche (6) emittierten Lichts zu erhöhen, wobei die mindestens eine abgerundete Ausnehmung (7a, 7b) mindestens teilweise an dem ersten Reflexionselement (5a) angeordnet ist, **dadurch gekennzeichnet, dass** die mindestens eine abgerundete Ausnehmung (7a, 7b) eine erste abgerundete Ausnehmung (7a) und eine zweite abgerundete Ausnehmung (7b) umfasst, wobei sich die zweite abgerundete Ausnehmung (7b) in die erste abgerundete Ausnehmung (7a) erstreckt.

2. Lichtleiter (1) nach Anspruch 1, **dadurch gekennzeichnet, dass** die mindestens eine abgerundete Ausnehmung (7a, 7b) eine runde Form aufweist.

3. Lichtleiter (1) nach einem der vorhergehenden Ansprüche, **dadurch gekennzeichnet, dass** die erste abgerundete Ausnehmung (7a) mindestens teilweise an dem ersten Reflexionselement (5a) angeordnet ist und die zweite abgerundete Ausnehmung (7b) mindestens teilweise an dem zweiten Reflexionselement (5b) angeordnet ist.

4. Lichtleiter (1) nach einem der vorhergehenden Ansprüche, **dadurch gekennzeichnet, dass** die zweite abgerundete Ausnehmung (7b) kleiner als die erste abgerundete Ausnehmung (7a) ist.

5. Fahrzeuglampe, **dadurch gekennzeichnet, dass** sie eine Lichtquelle (4) und den Lichtleiter (1) nach einem der vorhergehenden Ansprüche umfasst, wobei der Lichtleiter (4) auf die Kopplungsfläche (2a) des ersten Teils (2) des Lichtleiters (1) gerichtet ist.

6. Fahrzeuglampe nach Anspruch 5, **dadurch gekennzeichnet, dass** sie eine Seitenmarkierungsleuchte ist.

7. Form zum Formen des Lichtleiters (1) nach einem der Ansprüche 1 bis 4, wobei die Form ein längliches erstes Formteil zum Formen des länglichen ersten Teils (2) des Lichtleiters (1) und ein zweites Formteil zum Formen des zweiten Teils (3) des Lichtleiters (1) umfasst, wobei das erste Formteil ein Kopplungsflächenformteil zum Formen der Kopplungsfläche (2a) des Lichtleiters (1) zum Einkoppeln von Licht von einer Lichtquelle (4) in den Lichtleiter (1) umfasst und wobei das zweite Formteil ein Reflexionsflächenformteil zum Formen der Reflexionsfläche (5) des Lichtleiters (1) und ein Ausgabeflächenformteil zum Formen der Ausgabefläche (6) des Lichtleiters (1) zum Ausgeben von Licht vom Lichtleiter (1) umfasst, wobei das Reflexionsflächenformteil eine Vielzahl von Reflexionselementformteilen zum Formen einer Vielzahl von Reflexionselementen (5a, 5b) des Lichtleiters (1) zum Reflektieren von Licht in Richtung der Ausgabefläche (6) des Lichtleiters (1) umfasst, wobei die Vielzahl von Reflexionselementformteilen mindestens ein erstes Reflexionselementformteil zum Formen des ersten Reflexionselements (5a) des Lichtleiters (1) und ein zweites Reflexionselementformteil zum Formen des zweiten Reflexionselements (5b) des Lichtleiters (1) umfasst, wobei das erste Reflexionselementformteil dem ersten Formteil von der Vielzahl von Reflexionselementformteilen am nächsten ist und das zweite Reflexionselementformteil dem ersten Reflexionselementformteil von der Vielzahl von Reflexionselementformteilen am nächsten ist, wobei das Ausgabeflächenformteil ein proximales Ausgabeabschnittformteil zum Formen des proximalen Ausgabeabschnitts des Lichtleiters (1), der dem ersten Formteil proximal ist, und ein distales Ausgabeabschnittsformteil zum Formen des distalen Ausgabeabschnitts des Lichtleiters (1), der dem zweiten Formteil distal ist, umfasst, wobei die Form mindestens einen abgerundeten Vorsprung zum Formen der mindestens einen abgerundeten Ausnehmung (7a, 7b) des Lichtleiters (1) zum Reflektieren von Licht in Richtung des proximalen Ausgabeabschnitts des Lichtleiters (1) zum Erhöhen der Homogenität des von der Ausgabefläche (6) des Lichtleiters (1) ausgegebenen Lichts umfasst, wobei der mindestens eine abgerundete Vorsprung mindestens teilweise an dem ersten Reflexionselementformteil angeordnet ist, **dadurch gekennzeichnet, dass** der mindestens eine abgerundete Vorsprung einen ersten abgerundeten Vorsprung und einen zweiten abgerundeten Vorsprung, ausgebildet an dem Reflexionsflächenformteil, umfasst, wobei sich der zweite abgerundete Vorsprung in den ersten abgerundeten Vorsprung erstreckt.

8. Verfahren zum Herstellen der Form nach Anspruch 7, **dadurch gekennzeichnet, dass** es folgende Schritte umfasst:
• Bereitstellen einer Form, wobei die Form ein erstes längliches Formteil zum Formen des länglichen ersten Teils (2) des Lichtleiters (1) und ein zweites Formteil zum Formen des zweiten Teils (3) des Lichtleiters (1) umfasst, wobei das erste Formteil ein Kopplungsflächenformteil zum Formen der Kopplungsfläche (2a) des Lichtleiters (1) zum Einkoppeln von Licht von einer Lichtquelle (4) in den Lichtleiter (1) umfasst und wobei das zweite Formteil ein Reflexionsflächenformteil zum Formen der Reflexionsfläche (5) des Lichtleiters (1) und ein Ausgabeflächenformteil zum Formen der Ausgabefläche (6) des Lichtleiters (1) zum Ausgeben von Licht vom Lichtleiter (1) umfasst, wobei das Reflexionsflächenformteil eine Vielzahl von Reflexionselementformteilen zum Formen einer Vielzahl von Reflexionselementen (5a, 5b) des Lichtleiters (1) zum Reflektieren von Licht in Richtung der Ausgabefläche (6) des Lichtleiters (1) umfasst, wobei die Vielzahl von Reflexionselementformteilen mindestens ein erstes Reflexionselementformteil zum Formen des ersten Reflexionselements (5a) des Lichtleiters (1) und ein zweites Reflexionselementformteil zum Formen des zweiten Reflexionselements (5b) des Lichtleiters (1) umfasst, wobei das erste Reflexionselementformteil dem ersten Formteil von der Vielzahl von Reflexionselementformteilen am nächsten ist und das zweite Reflexionselementformteil dem ersten Reflexionselementformteil von der Vielzahl von Reflexionselementformteilen am nächsten ist, wobei das Ausgabeflächenformteil ein proximales Ausgabeabschnittformteil zum Formen des proximalen Ausgabeabschnitts des Lichtleiters (1), der dem ersten Formteil proximal ist, und ein distales Ausgabeabschnittformteil zum Formen des distalen Ausgabeabschnitts des Lichtleiters (1), der dem zweiten Formteil distal ist, umfasst;
• Ausbilden mindestens eines abgerundeten Vorsprungs an der Form zum Formen der mindestens einen abgerundeten Ausnehmung (7a, 7b) des Lichtleiters (1) zum Reflektieren von Licht in Richtung des proximalen Ausgabeabschnitts des Lichtleiters (1) zum Erhöhen der Homogenität des von der Ausgabefläche (6) des Lichtleiters (1) ausgegebenen Lichts, wobei der mindestens eine abgerundete Vorsprung mindestens teilweise an dem ersten Reflexionselementformteil ausgebildet ist, wobei
• der mindestens eine abgerundete Vorsprung einen ersten abgerundeten Vorsprung und einen zweiten abgerundeten Vorsprung, ausgebildet an dem Reflexionsflächenformteil, umfasst, wobei sich der zweite abgerundete Vorsprung in den ersten abgerundeten Vorsprung erstreckt.

## Revendications

1. Guide de lumière (1) pour lampe de véhicule, le guide de lumière (1) comprenant une première partie allongée (2) et une deuxième partie (3), la première partie (2) comprenant une face de couplage (2a) pour coupler la lumière provenant d'une source de lumière (4) dans le guide de lumière (1) et la deuxième partie (3) comprenant une surface de réflexion (5) et une surface de sortie (6) pour émettre la lumière provenant du guide de lumière (1), la surface de réflexion (5) comprenant plusieurs éléments de réflexion (5a, 5b) pour réfléchir la lumière vers la surface de sortie (6), les éléments de réflexion (5a, 5b) comprenant au moins un premier élément de réflexion (5a) et un deuxième élément de réflexion (5b), le premier élément de réflexion (5a) étant le plus proche de la première partie (2) des éléments de réflexion (5a, 5b) et le deuxième élément de réflexion (5b) étant le plus proche du premier élément de réflexion (5a) des éléments de réflexion (5a, 5b), la surface de sortie (6) comprenant une section de sortie proximale qui est proximale à la première partie (2) et une section de sortie distale qui est distale à la première partie (2), le guide de lumière (1) comprenant au moins un évidement arrondi (7a, 7b) pour réfléchir la lumière vers la section de sortie proximale afin d'augmenter l'homogénéité de la lumière émise par la surface de sortie (6), au moins un évidement arrondi (7a, 7b) étant disposé au moins partiellement sur le premier élément de réflexion (5a), **caractérisé en ce que** au moins un évidement arrondi (7a, 7b) comprend un premier évidement arrondi (7a) et un deuxième évidement arrondi (7b), le deuxième évidement arrondi (7b) s'étendant dans le premier évidement arrondi (7a).

2. Guide de lumière (1) selon la revendication 1, **caractérisé en ce que** au moins un évidement arrondi (7a, 7b) est de forme sphérique.

3. Guide de lumière (1) selon l'une des revendications précédentes **caractérisé en ce que** le premier évidement arrondi (7a) est disposé au moins partiellement sur le premier élément de réflexion (5a) et le deuxième évidement arrondi (7b) est disposé au moins partiellement sur le deuxième élément de réflexion (5b).

4. Le guide de lumière (1) selon l'une des revendications précédentes **caractérisé en ce que** le deuxième évidement arrondi (7b) est plus petit que le premier évidement arrondi (7a).

5. Lampe de véhicule **caractérisée en ce qu'**elle comprend une source de lumière (4) et le guide de lumière (1) selon l'une des revendications précédentes, la source de lumière (4) étant dirigée vers la face de couplage (2a) de la première partie (2) du guide de lumière (1).

6. La lampe de véhicule selon la revendication 5 **caractérisée en ce qu'**il s'agit d'un feu de gabarit latéral.

7. Moule pour mouler le guide de lumière (1) selon l'une des revendications 1 à 4, le moule comprenant une première partie de moule allongée pour mouler la première partie allongée (2) du guide de lumière (1) et une deuxième partie de moule pour mouler la deuxième partie (3) du guide de lumière (1), la première partie de moule comprenant une partie de moule de face de couplage pour mouler la face de couplage (2a) du guide de lumière (1) pour coupler la lumière provenant d'une source de lumière (4) dans le guide de lumière (1) et la deuxième partie de moule comprenant une partie de moule de surface de réflexion pour mouler la surface de réflexion (5) du guide de lumière (1) et une partie de moule de surface de sortie pour mouler la surface de sortie (6) du guide de lumière (1) pour émettre la lumière provenant du guide de lumière (1), la partie de moule de surface de réflexion comprenant plusieurs parties de moule d'éléments de réflexion pour mouler plusieurs éléments de réflexion (5a, 5b) du guide de lumière (1) pour réfléchir la lumière vers la surface de sortie (6) du guide de lumière (1), les parties de moule d'éléments de réflexion comprenant au moins une première partie de moule d'élément de réflexion pour mouler le premier élément de réflexion (5a) du guide de lumière (1) et une deuxième partie de moule d'élément de réflexion pour mouler le deuxième élément de réflexion (5b) du guide de lumière (1), la première partie de moule d'élément de réflexion étant la plus proche de la première partie de moule parmi les parties de moule d'élément de réflexion et la deuxième partie de moule d'élément de réflexion est la plus proche de la première partie de moule d'élément de réflexion parmi les parties de moule d'élément de réflexion, la partie de moule de surface de sortie comprenant une partie de moule de section de sortie proximale pour mouler la section de sortie proximale du guide de lumière (1) qui est proximale à la première partie moulée et une partie moulée de section de sortie distale pour mouler la section de sortie distale du guide de lumière (1) qui est distale à la deuxième partie moulée, le moule comprenant au moins une protubérance arrondie pour mouler au moins un évidement arrondi (7a, 7b) du guide de lumière (1) pour réfléchir la lumière vers la section de sortie proximale du guide de lumière (1) afin d'augmenter l'homogénéité de la lumière émise par la surface de sortie (6) du guide de lumière (1), au moins une protubérance arrondie étant disposée au moins partiellement sur la première partie de moule d'élément de réflexion, **caractérisé en ce qu'**au moins une protubérance arrondie comprend une première protubérance arrondie et une deuxième protubérance arrondie formées sur la partie de moule de surface de réflexion, la deuxième protubérance arrondie s'étendant dans la première protubérance arrondie.

8. Procédé de fabrication du moule selon la revendication 7 **caractérisé en ce qu'**il comprend les étapes suivantes :
• fournir un moule, le moule comprenant une première partie de moule allongée pour mouler la première partie allongée (2) du guide de lumière (1) et une deuxième partie de moule pour mouler la deuxième partie (3) du guide de lumière (1), la première partie de moule comprenant une partie de moule de face de couplage pour mouler la face de couplage (2a) du guide de lumière (1) pour coupler la lumière provenant d'une source de lumière (4) dans le guide de lumière (1) et la deuxième partie de moule comprenant une partie de moule de surface de réflexion pour mouler la surface de réflexion (5) du guide de lumière (1) et une partie de moule de surface de sortie pour mouler la surface de sortie (6) du guide de lumière (1) pour émettre la lumière provenant du guide de lumière (1), la partie de moule de surface de réflexion comprenant plusieurs parties de moule d'éléments de réflexion pour mouler une pluralité d'éléments de réflexion (5a, 5b) du guide de lumière (1) pour réfléchir la lumière vers la surface de sortie (6) du guide de lumière (1), plusieurs parties de moulage d'éléments de réflexion comprenant au moins une première partie de moulage d'éléments de réflexion pour mouler le premier élément de réflexion (5a) du guide de lumière (1) et une deuxième partie de moulage d'éléments de réflexion pour mouler le deuxième élément de réflexion (5b) du guide de lumière (1), la première partie de moule d'élément de réflexion étant la plus proche de la première partie de moule parmi plusieurs parties de moule d'éléments de réflexion et la deuxième partie de moule d'élément de réflexion étant la plus proche de la première partie de moule d'élément de réflexion parmi les parties de moule d'éléments de réflexion, la partie de moule de surface de sortie comprenant une partie de moule de section de sortie proximale pour mouler la section de sortie proximale du guide de lumière (1) qui est proximale par rapport à la première partie moulée et une partie moulée de section de sortie distale pour mouler la section de sortie distale du guide de lumière (1) qui est distale par rapport à la deuxième partie moulée ;
• former au moins une protubérance arrondie sur le moule pour mouler au moins un renfoncement arrondi (7a, 7b) du guide de lumière (1) pour réfléchir la lumière vers la section de sortie proximale du guide de lumière (1) afin d'augmenter l'homogénéité de la lumière émise par la surface de sortie (6) du guide de lumière (1), au moins une protubérance arrondie étant formée au moins partiellement sur la partie de moule de l'élément de réflexion,
• au moins la protubérance arrondie comprenant une première protubérance arrondie et une deuxième protubérance arrondie formées sur la partie moulée de la surface réfléchissante, la deuxième protubérance arrondie s'étendant dans la première protubérance arrondie.
